# EUROPEAN PATENT APPLICATION

(11) **EP 4 253 048 A1**
(43) Date of publication of application: **04.10.2023**
(21) Application number: 23161448.8
(22) Date of filing: 13.03.2023
(51) Int. Cl.: B32B 27/12, B32B 5/02, B32B 5/24, B32B 5/18, B32B 3/08

(54) **LAYERED BOARD**

(30) Priority: 28.03.2022 JP 2022052389
(71) Applicant: Meiwa Industry Co., Ltd., Atsugi-shi, Kanagawa 243-0003 (JP)
(72) Inventor: YOKOMORI, Junichi, Kanagawa, 243-0003 (JP)
(74) Representative: Viering, Jentschura & Partner mbB Patent- und Rechtsanwälte

(57) **Abstract**

A layered board includes a layered board body formed in a plate shape. The layered board body includes: a pair of resin films arranged spaced apart in a thickness direction of the layered board body; a pair of fiber mats layered on inner surfaces of the pair of resin films, respectively; and foam arranged between inner surfaces of the pair of fiber mats. At least one reinforcing member is embedded in the foam.

## Description

### TECHNICAL FIELD

The present invention relates to a layered board.

### BACKGROUND

A layered board has been known in which foam and a reinforcing member are interposed between two thermoplastic resin base materials (see JP5876461B2 and JP6062844B2, for example).

### SUMMARY

In the above-mentioned JP5876461B2 and JP6062844B2, the foam and the reinforcing member are arranged next to each other between two thermoplastic resin base materials in the in-plane direction of the layered board, and the foam and the reinforcing member are not in close contact (integrated) with each other. For this reason, there is room to increase the stiffness of the layered board.

In addition, JP5406489B2 discloses that, since a panel formed with a hollow molded body is made and then filled with polyurethane, a reinforcing member cannot be placed in the hollow portion of the panel. If an attempt is made to improve the stiffness for the required performance in the layered board, there is a limit in terms of the stiffness because the reinforcing member cannot be placed in the hollow portion of the panel.

In view of the above circumstances, an object of the present invention is to improve the stiffness of a layered board by bringing foam and a reinforcing member into close contact with each other, thereby improving the load-bearing performance of the layered board.

A layered board according to the present invention includes a layered board body formed in a plate shape, and the layered board body includes: a pair of resin films arranged spaced apart in a thickness direction of the layered board body; a pair of fiber mats layered on inner surfaces of the pair of resin films, respectively; and foam arranged between inner surfaces of the pair of fiber mats, and at least one reinforcing member is embedded in the foam.

The present invention makes it possible to improve the stiffness of a layered board by bringing foam and a reinforcing member into close contact with each other, thereby improving the load-bearing performance of the layered board.

### BRIEF DESCRIPTION OF THE DRAWINGS

FIG. 1 is a perspective view illustrating a luggage board structure according to an embodiment.
FIG. 2 is a perspective view of a vehicle deck board according to the embodiment viewed from the surface side.
FIG. 3 is a cross-sectional view taken along the line A-A of FIG. 2.
FIG. 4 is a cross-sectional view taken along the line B-B of FIG. 2.
FIG. 5A is a perspective view of a reinforcing member according to the embodiment.
FIG. 5B is a perspective view of a reinforcing member according to a modified example.
FIG. 5C is a perspective view of a reinforcing member according to a modified example.
FIG. 6A is a perspective view of the vehicle deck board according to the embodiment.
FIG. 6B is a perspective view of a vehicle deck board according to a modified example.
FIG. 7A is a perspective view of a vehicle deck board according to a modified example.
FIG. 7B is a perspective view of a vehicle deck board according to a modified example.
FIG. 8A is a perspective view of a vehicle deck board according to a modified example.
FIG. 8B is a perspective view of a vehicle deck board according to a modified example.
FIG. 9 is an explanatory view illustrating an outline of a performance test of a layered board.
FIG. 10A is a plan view of a layered board illustrated as a comparative example.
FIG. 10B is a plan view of a layered board according to Example 1.
FIG. 10C is a plan view of a layered board according to Example 2.
FIG. 11 is a table illustrating the results of the performance test of the layered board.

### DETAILED DESCRIPTION

An embodiment will be described in detail with reference to the drawings.

In the present embodiment, a vehicle deck board will be exemplified as a layered board.

### [Overall configuration of vehicle deck board]

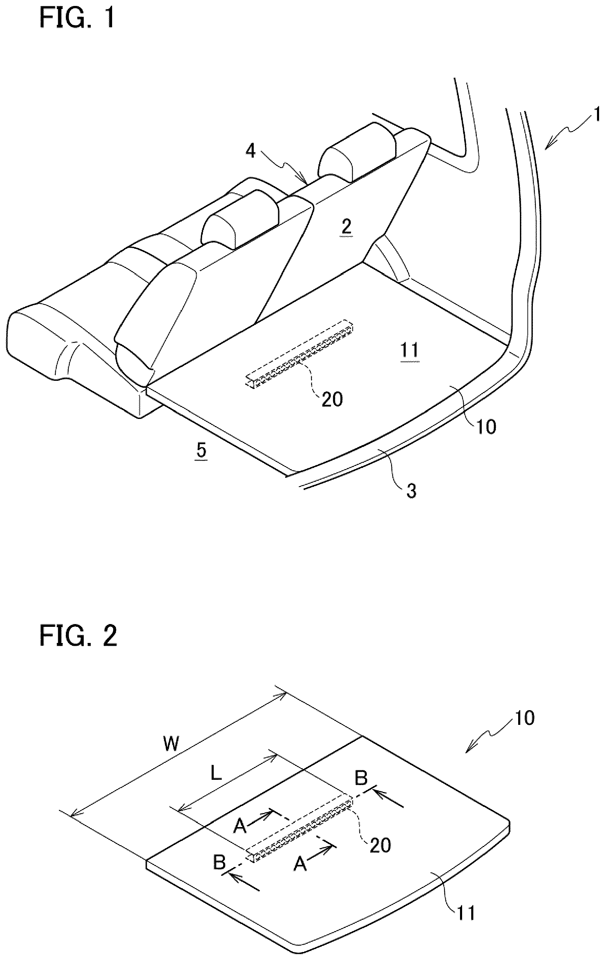

As illustrated in FIG. 1, a vehicle deck board 10 (layered board) according to the present embodiment is placed on a floor 3 of a luggage compartment 2 of an automobile 1 and covers the floor 3 of the luggage compartment 2. The luggage compartment 2 is separated by a rear seat 4 as the front wall of the luggage compartment 2, a rear door (rear wall) which is not illustrated, and a roof panel (upper wall) which is not illustrated.

The vehicle deck board 10 is configured to allow luggage to be taken in and out of a trunk 5 at the lower side of the floor 3 by turning the whole of the vehicle deck board 10 upward around a turning shaft (not illustrated) provided at the front end in the vehicle front-rear direction. In the present embodiment, it is possible to turn the vehicle deck board 10 by hooking a finger or the like on the rear end of the vehicle deck board 10 in the vehicle front-rear direction and lifting up the vehicle deck board 10.

As illustrated in FIGS. 2 to 4, the vehicle deck board 10 (layered board) includes a layered board body 11 formed in a plate shape. The layered board body 11 includes a first base material 12 placed at the surface side of the layered board body 11 (upper side in the figure), a second base material 13 placed at the rear side of the layered board body 11 (lower side in the figure), and foam 18 interposed between the inner surface of the first base material 12 and the inner surface of the second base material 13.

The first base material 12 is composed of a first resin film 14 placed at the surface side of the layered board body 11, and a first fiber mat 16 layered on the inner surface of the first resin film 14. Further, the second base material 13 is composed of a second resin film 15 placed at the rear side of the layered board body 11, and a second fiber mat 17 layered on the inner surface of the second resin film 15.

That is, the layered board body 11 includes a pair of resin films 14 and 15 arranged spaced apart in the thickness direction of the layered board body 11, and a pair of fiber mats 16 and 17 layered on the inner surfaces of the pair of resin films 14 and 15, respectively. The layered board body 11 also includes the foam 18 arranged between the inner surfaces of the pair of fiber mats 16 and 17.

The vehicle deck board 10 (layered board) may also have a skin (not illustrated) covering at least the surface side of the layered board body 11 (first base material 12). Further, the vehicle deck board 10 (layered board) may have a skin (not illustrated) covering the rear side of the layered board body 11 (second base material 13).

The resin films 14 and 15 are thermoplastic resin films in the present embodiment and are composed of, for example, polyolefin such as polypropylene or polyethylene. For example, the resin films 14 and 15 having a weight in the range of 30 g/m² to 200 g/m² (0.03 mm to 0.2 mm in thickness) are used.

The fiber mats 16 and 17 are nonwoven fabrics in the present embodiment and are composed of, for example, a glass fiber, a polyester fiber, a polyamide fiber, an acrylic fiber, a vinylon fiber, a carbon fiber, a natural fiber (for example, a cellulose nanofiber), or the like. For example, the fiber mats 16 and 17 having a weight in the range of 200 g/m² to 1000 g/m² (0.2 mm to 2.0 mm in thickness) are used.

When a glass fiber is used for the fiber mats 16 and 17, the fiber mats 16 and 17 may be a fabric, a nonwoven fabric, a felted glass mat, a lattice-woven glass cloth, or the like. When a glass mat is used, a chopped strand mat is preferred.

The foam 18 is composed of, for example, a polyurethane foam. The expansion ratio of the polyurethane foam constituting the foam 18 is, for example, 5:1 to 30:1.

As illustrated in FIGS. 2 to 4, at least one reinforcing member 20 is embedded in the foam 18 of the layered board body 11.

The reinforcing member 20 is made of a metallic material and is composed of, for example, cold-rolled steel, aluminum, or the like. The reinforcing member 20 has a thickness in the range of 0.4 mm to 2.0 mm. In the case of cold-rolled steel, the thickness is preferably in the range of 0.5 mm to 1.2 mm. When the thickness exceeds 1.2 mm, the strength is improved but the weight is heavy, and thus it is undesirable. In the case of aluminum, the thickness is preferably in the range of 1.0 mm to 2.0 mm.

However, the present embodiment is not limited to the above configuration, and the reinforcing member 20 may be composed of a composite material such as glass fiber reinforced resin (GFRP), carbon fiber reinforced resin (CFRP), or aramid fiber reinforced resin (AFRP).

### [Detailed configuration of reinforcing member]

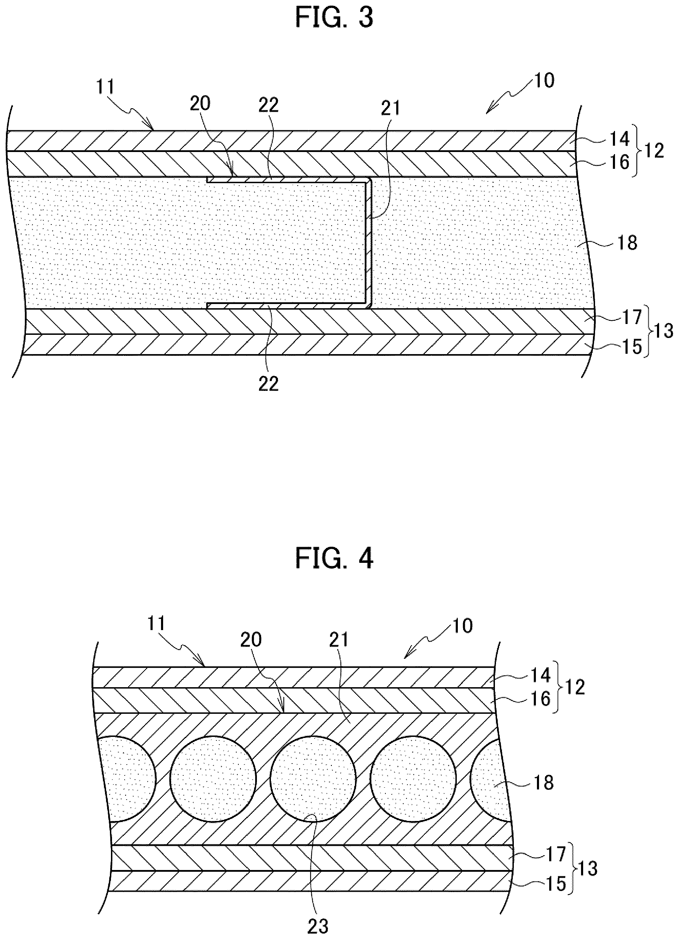

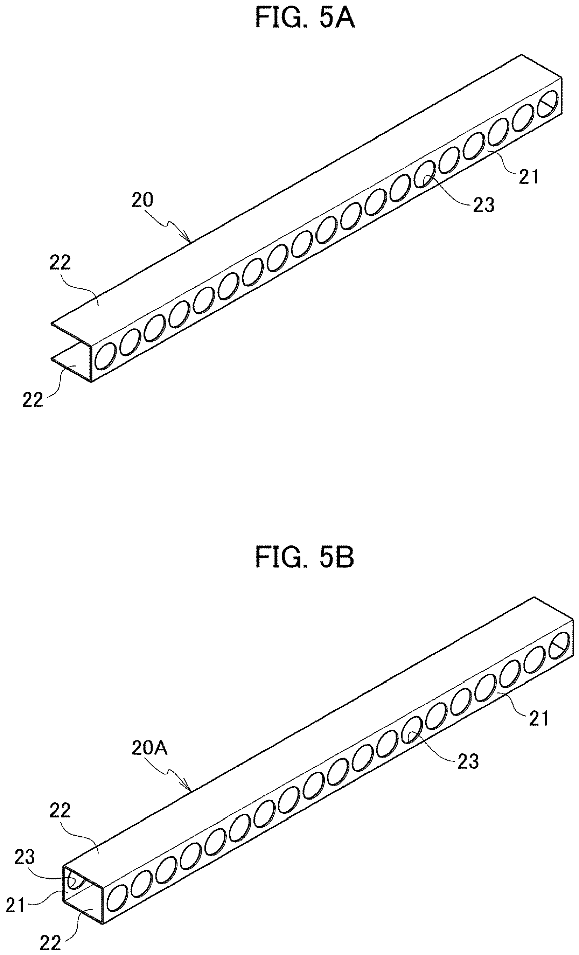

As illustrated in FIG. 5A, the reinforcing member 20 according to the present embodiment is formed in a cross-sectional U-shape. As illustrated in FIG. 3 and FIG. 4, the reinforcing member 20 includes a longitudinal section 21 interposed between the inner surfaces of the pair of fiber mats 16 and 17, and a pair of transverse sections 22 and 22 connected to both upper and lower ends of the longitudinal section 21, respectively. The upper surface of the transverse section 22 at the upper side is in close contact with the lower surface of the first fiber mat 16 in the figure, and the lower surface of the transverse section 22 at the lower side is in close contact with the upper surface of the second fiber mat 17 in the figure.

In the longitudinal section 21, a plurality of through-holes 23 are formed at intervals in the length direction of the reinforcing member 20. The inner sides of the through-holes 23 are filled with a foam material (foam 18) and are in close contact with one other.

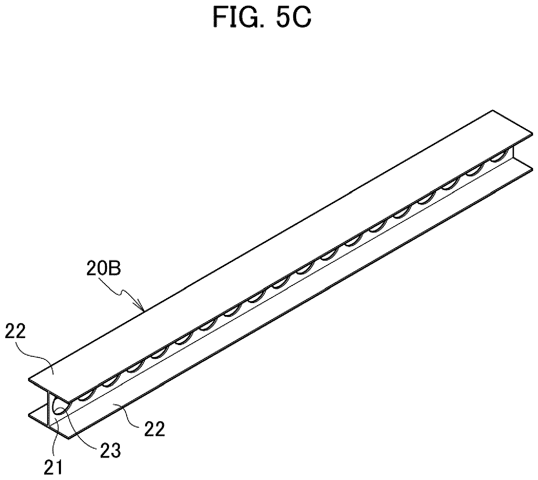

As illustrated in FIG. 5B, a reinforcing member 20A may be formed in a cross-sectional quadrangle, and as illustrated in FIG. 5C, a reinforcing member 20B may be formed in a cross-sectional H-shape. Further, although not illustrated, the reinforcing member 20 may be formed in a cross-sectional Z-shape. That is, the reinforcing member 20 has a cross-sectional shape which is formed in any of a U-shape, a quadrangle, an H-shape, and a Z-shape.

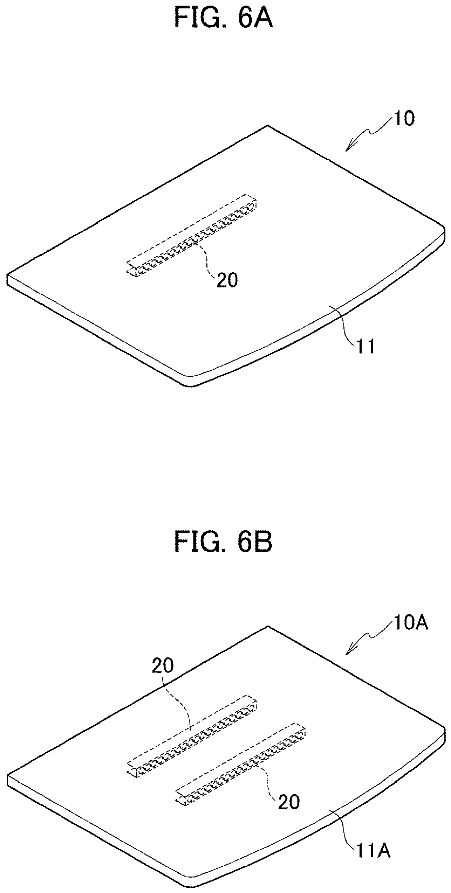

In the vehicle deck board 10 according to the present embodiment illustrated in FIG. 6A, one reinforcing member 20 is embedded in the foam 18 in such a way as to extend along the width direction of the layered board body 11 (vehicle width direction). The length L of the reinforcing member 20 in the width direction of the layered board body 11 is shorter than the width W of the layered board body 11 (see FIG. 2). The length L of the reinforcing member 20 is preferably in the range of 1/4 to 3/4 of the product width (length). In the present embodiment, the length L of the reinforcing member 20 in the width direction of the layered board body 11 is 1/2 of the width W of the layered board body 11 (L = W/2).

A plurality of reinforcing members 20 (in the figure, two reinforcing members) may be embedded in the foam 18 in such a way as to extend along the width direction of the layered board body 11A (vehicle width direction), as in the vehicle deck board 10A illustrated in FIG. 6B.

To further improve the stiffness of the vehicle deck board 10A illustrated in FIG. 6B, a short reinforcing member (not illustrated) may be added between two reinforcing members 20, and three reinforcing members in total may be arranged in an H-shape in plan view. In this case, the short reinforcing member (not illustrated) may have 1/4 of the length of the layered board body 11A in the depth direction.

In addition, although not illustrated, one reinforcing member of 1/2 length and one reinforcing member of 1/4 length may be placed. The reinforcing member may be placed at a position (location) where strength is required in the vehicle deck board.

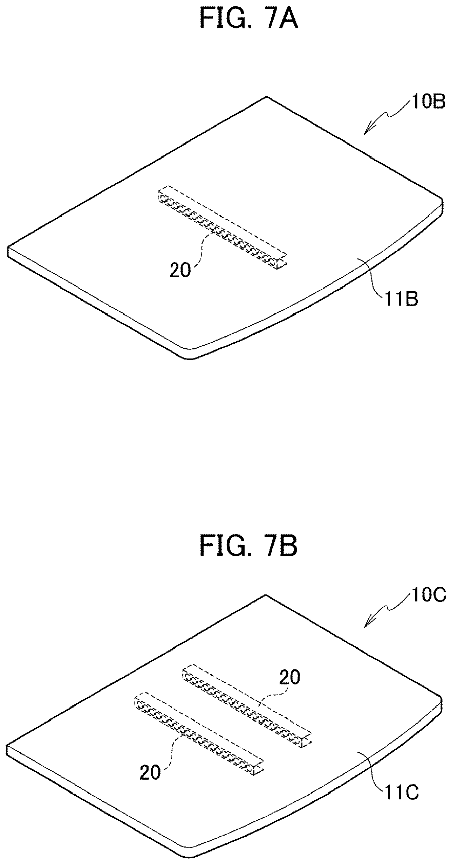

One reinforcing member 20 may be embedded in the foam 18 in such a way as to extend along the depth direction of the layered board body 11B (vehicle front-rear direction), as in the vehicle deck board 10B illustrated in FIG 7A.

A plurality of reinforcing members 20 (in the figure, two reinforcing members) may be embedded in the foam 18 in such a way as to extend along the depth direction of the layered board body 11C (vehicle front-rear direction), as in the vehicle deck board 10C illustrated in FIG. 7B.

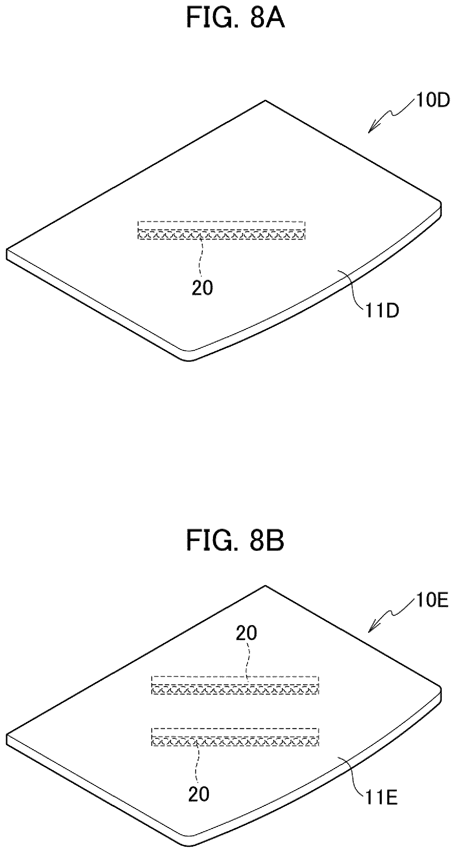

One reinforcing member 20 may be embedded in the foam 18 in such a way as to extend along the direction inclined with respect to the width direction and the depth direction of the layered board body 11D, as in the vehicle deck board 10D illustrated in FIG. 8A.

A plurality of reinforcing members 20 (in the figure, two reinforcing members) may be embedded in the foam 18 in such a way as to extend along the direction inclined with respect to the width direction and depth direction of the layered board body 11E, as in the vehicle deck board 10E illustrated in FIG. 8B.

That is, as illustrated in FIG. 2, the reinforcing member 20 is embedded in the foam 18 in such a way as to extend along the direction perpendicular to the thickness direction of the layered board body 11, and the length L of the reinforcing member 20 in the perpendicular direction is shorter than the length of the layered board body 11 in the perpendicular direction (width W) (L < W).

In addition, the stiffness of the layered board 10 can be adjusted by appropriately changing the length and the extending direction of the reinforcing member 20 and the number of the reinforcing members 20 according to the load-bearing performance required for the vehicle deck board 10 (layered board).

### [Method of forming vehicle deck board]

Next, an example regarding a method of forming the vehicle deck board 10 (layered board) will be described.

### (First process)

First, the second base material 13 is placed, with the second fiber mat 17 at the upper side, in the lower mold of a molding die which is divided into upper and lower sections, the reinforcing member 20 is placed on the second base material 13, and the first base material 12 is placed on the reinforcing member 20 with the first fiber mat 16 at the lower side.

### (Second process)

The upper mold is lowered toward the lower mold, the lower mold and the upper mold of the molding die are closed, and with the molding die closed, a foaming material (urethane material) is injected between the second base material 13 and the first base material 12 to be filled therebetween.

In the second process, the foaming material (urethane material) injected between the second base material 13 and the first base material 12 foams and joins to the first fiber mat 16 of the first base material 12 and the second fiber mat 17 of the second base material 13. In addition, the foaming material (urethane material) injected between the second base material 13 and the first base material 12 enters inside the plurality of through-holes 23 provided in the longitudinal section 21 of the reinforcing member 20 and integrates together with the reinforcing member 20.

### (Third process)

After the foam 18 has cured, the upper mold is lifted to open the lower mold and the upper mold of the closed molding die, and the molded product (layered board body 11) is removed from the molding die.

### (Fourth process)

The excess portions of the first base material 12 and the second base material 13 in the molded product (layered board body 11), which has been taken out of the molding die, are trimmed to finish the outer peripheral end of the molded product (layered board body 11).

### (Fifth process)

If necessary, a skin (not illustrated) may be attached so as to cover at least the surface side (first base material 12) of the molded product (layered board body 11).

In this way, the vehicle deck board 10 (layered board) is formed.

### [Results of performance test of layered board]

Next, the performance test results of the layered board 10 according to the present embodiment will be described.

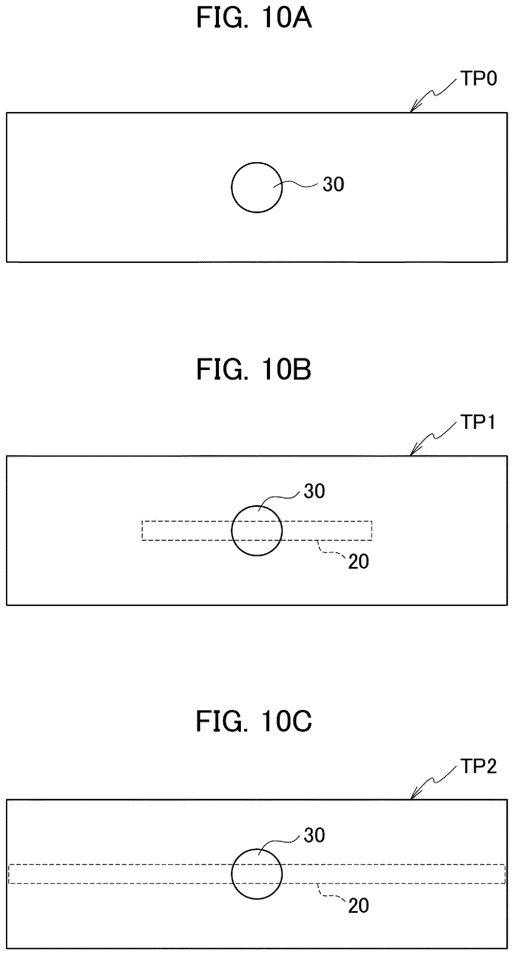

The specimens TP0, TP1, and TP2 in the Comparative Example, Example 1, and Example 2 illustrated below are all molded products with a thickness of 20 mm × width of 180 mm × length of 600 mm (See FIGS. 10A, 10B and 10C).

The specimens TP0, TP1, and TP2 in the Comparative Example, Example 1, and Example 2 all have a thickness of 20 mm.

Specifically, the first base material 12 is composed of a polypropylene film (first resin film 14) with a weight of 100 g/m² and a glass fiber mat (first fiber mat 16) with a weight of 600 g/m².

In addition, the foam 18 is composed of a foamed urethane molded body, which has an expansion ratio of 20.

Further, the second base material 13 is composed of a polypropylene film (second resin film 15) with a weight of 100 g/m² and a glass fiber mat (second fiber mat 17) with a weight of 300 g/m².

### (Comparative example)

As illustrated in FIG. 10A, the reinforcing member 20 is not embedded in the specimen TP0 in the Comparative Example. The mass of the specimen TP0 is 237 g.

### (Example 1)

As illustrated in FIG. 10B, the reinforcing member 20 formed using a cold-rolled steel plate with a thickness of 0.8 mm is embedded in the specimen TP1 in Example 1. In the specimen TP1 in Example 1, the length of the reinforcing member 20 is 275 mm. The mass of the specimen TP1 is 327 g.

### (Example 2)

As illustrated in FIG. 10C, , the reinforcing member 20 formed using a cold-rolled steel plate with a thickness of 0.8 mm is also embedded in the specimen TP2 in Example 2. In the specimen TP2 in Example 2, the length of the reinforcing member 20 is 595 mm. The mass of the specimen TP2 is 432 g.

### (Evaluation)

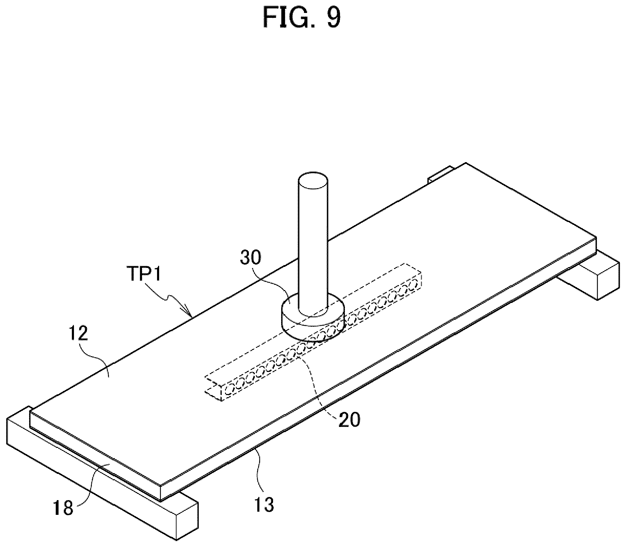

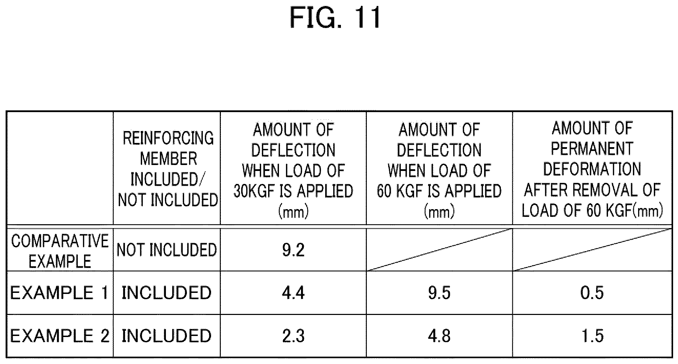

The amount of deflection under a normal temperature environment obtained when a load of 30 kgf (about 300 N) and a load of 60 kgf (about 600 N) were applied to the central portion of the specimens in the Comparative Example, Example 1, and Example 2 by using a loading element 30 of *φ* 60 (see FIG. 9) was measured, and the amount of permanent deformation after removal of the load of 60 kgf was measured. The results are illustrated in FIG. 11.

### (Results)

In a case where the required performance was defined as being an amount of deflection of 10 mm or less under a normal temperature environment when a load of 60 kgf was applied, the specimen broke at 31 kgf in the Comparative Example, and it was found that the stiffness as a layered board was insufficient. In the Comparative Example, the amount of deflection under a normal temperature environment obtained when a load of 30 kgf was applied was 9.2 mm.

In Example 1, the amount of deflection was 9.5 mm under a normal temperature environment when a load of 60 kgf was applied, and it was found that the required performance described above was satisfied. In Example 1, the specimen broke at 68 kgf, and it was found that the stiffness as a layered board was sufficient. In Example 1, the amount of deflection under a normal temperature environment obtained when a load of 30 kgf was applied was 4.4 mm, and the amount of permanent deformation after removal of the load of 60 kgf was 0.5 mm.

In Example 2, the amount of deflection was 4.8 mm under a normal temperature environment when a load of 60 kgf was applied, and it was found that the required performance described above is satisfied. In Example 2, the specimen did not break even when a load of 100 kgf (about 1 kN) was applied, and the amount of deflection under a normal temperature environment obtained when a load of 100 kgf was applied was 9.6 mm, and it was found that the stiffness as a layered board was sufficient. In Example 2, the amount of deflection under a normal temperature environment obtained when a load of 30 kgf was applied was 2.3 mm, and the amount of permanent deformation after removal of the load of 60 kgf was 1.5 mm.

Thus, as illustrated in Example 1 and Example 2, when the layered board is formed by embedding the reinforcement member in the foam, it is possible to improve the load-bearing performance of the layered board.

### [Effect and the like]

The operation and effect according to the present embodiment will be described below.

(1) The layered board 10 includes a layered board body 11 formed in a plate shape. The layered board body 11 includes a pair of resin films 14 and 15 arranged spaced apart in the thickness direction of the layered board body 11, and a pair of fiber mats 16 and 17 layered on the inner surfaces of the pair of resin films 14 and 15, respectively. Further, the layered board body 11 also includes foam 18 arranged between the inner surfaces of the pair of fiber mats 16 and 17, and at least one reinforcing member 20 is embedded in the foam 18.

When at least one reinforcing member 20 is embedded in the foam 18 of the layered board 10 (layered board body 11), it is possible to improve the load-bearing performance of the layered board 10.

In addition, when a foaming material (urethane material) is filled between a pair of base materials 12, 13 (fiber mats 16 and 17), the foaming material is in close contact with the peripheral surface of the reinforcing member 20, and thus the reinforcing member 20 can be integrated with the foam 18, thereby making it possible to improve the stiffness of the layered board 10.

(2) The reinforcing member 20 is embedded in the foam 18 in such a way as to extend along the direction perpendicular to the thickness direction of the layered board body 11, and the length L of the reinforcing member 20 in the perpendicular direction is shorter than the length of the layered board body 11 in the perpendicular direction (width W).

By making the length L of the reinforcing member 20 shorter than the length of the layered board 10 (layered board body 11) (width W), it is possible to reduce the weight and manufacturing cost of the layered board 10 and to satisfy the minimum load-bearing performance required for the vehicle deck board 10 (layered board).

The short reinforcing member is less prone to bending deformation than the long reinforcing member, and the deformation (strain) of the layered board body 11 is mitigated, which makes it possible to reduce the permanent deformation of the layered board 10 after removal of the load. Thus, the reinforcing member 20 also contributes to maintaining the product quality of the layered board 10.

(3) The reinforcing member 20 includes at least a longitudinal section 21 interposed between the inner surfaces of the pair of fiber mats 16 and 17, and a plurality of through-holes 23 are formed in the longitudinal section 21.

By filling a foaming material (urethane material) between the pair of base materials 12 and 13 (fiber mats 16 and 17), the foaming material is in close contact with the peripheral surface of the reinforcing member 20 and the inner sides of the through-holes 23, thereby making it possible for the reinforcing member 20 to be integrated with the foam 18. This make it possible to further improve the stiffness of the layered board 10.

(4) The reinforcing member 20 has a cross-sectional shape which is formed in any of a U-shape, a quadrangle, an H-shape, and a Z-shape.

By appropriately changing and setting the cross-sectional shape of the reinforcing member 20 in any of a U-shape, a quadrangle, an H-shape, and a Z-shape, it is possible to adjust the stiffness of the layered board 10 according to the load-bearing performance required for the vehicle deck board 10 (layered board).

Although the layered board of the present invention has been described by way of example in the foregoing embodiment, the present invention is not limited to this embodiment, and various other embodiments can be employed without departing from the gist of the present invention.

## Claims

1. A layered board comprising:
a layered board body (11) formed in a plate shape, wherein
the layered board body (11) includes:
a pair of resin films (14, 15) arranged spaced apart in a thickness direction of the layered board body (11);
a pair of fiber mats (16, 17) layered on inner surfaces of the pair of resin films (14, 15), respectively; and
foam (18) arranged between inner surfaces of the pair of fiber mats (16, 17), and
at least one reinforcing member (20) is embedded in the foam (18).

2. The layered board according to claim 1, wherein
the reinforcing member (20) is embedded in the foam (18) in such a way as to extend along a direction perpendicular to the thickness direction of the layered board body (11), and
a length (L) of the reinforcing member (20) in the perpendicular direction is shorter than a length (W) of the layered board body (11) in the perpendicular direction.

3. The layered board according to claim 1 or 2, wherein
the reinforcing member (20) includes at least a longitudinal section (21) interposed between the inner surfaces of the pair of fiber mats (16, 17), and
a plurality of through-holes (23) are formed in the longitudinal section (21).

4. The layered board according to one of claims 1 to 3, wherein
the reinforcing member (20) has a cross-sectional shape which is formed in any of a U-shape, a quadrangle, an H-shape, and a Z-shape.
